# FASCICULE DE BREVET EUROPEEN

(11) **EP 1 607 584 B1**
(45) Date de publication et mention de la délivrance du brevet: **15.04.2015**
(21) Numéro de dépôt: 05291175.7
(22) Date de dépôt: 01.06.2005
(51) Int. Cl.: F02C 6/08, F01D 11/24

(54) **Système et procédé de contrôle d'un flux d'air dans une turbine à gaz**
Vorrichtung und Verfahren zur Luftstromsteuerung in einem Triebwerk
Control system and method to control the air flow in a gas turbine

(30) Priorité: 15.06.2004 FR 0406468
(43) Date de publication de la demande: 21.12.2005
(73) Titulaire: SNECMA, 75015 Paris (FR)
(72) Inventeur: Amiot, Denis, 77190 Dammarie les Lys (FR); Duny, Frédérick, 94420 Le Plessis Trevise (FR); Friedel, Jérôme, 77115 Blandy les Tours (FR); Kaincz, Christian, 77820 Le Chatelet en Brie (FR); Roussin-Moynier, Delphine, 92160 Antony (FR)
(74) Mandataire: Desormiere, Pierre-Louis

(56) Documents cités:
- GB-A- 2 104 966
- US-A- 4 303 093
- US-A- 6 035 929
- US-B1- 6 487 491

## Description

### Arrière plan de l'invention

La présente invention concerne les turbines haute-pression, telles que celles utilisées dans les moteurs aéronautiques, et dans lesquelles on pilote le jeu entre le sommet des aubes du rotor et l'enveloppe du stator au moyen d'un flux d'air dont le débit est contrôlé.

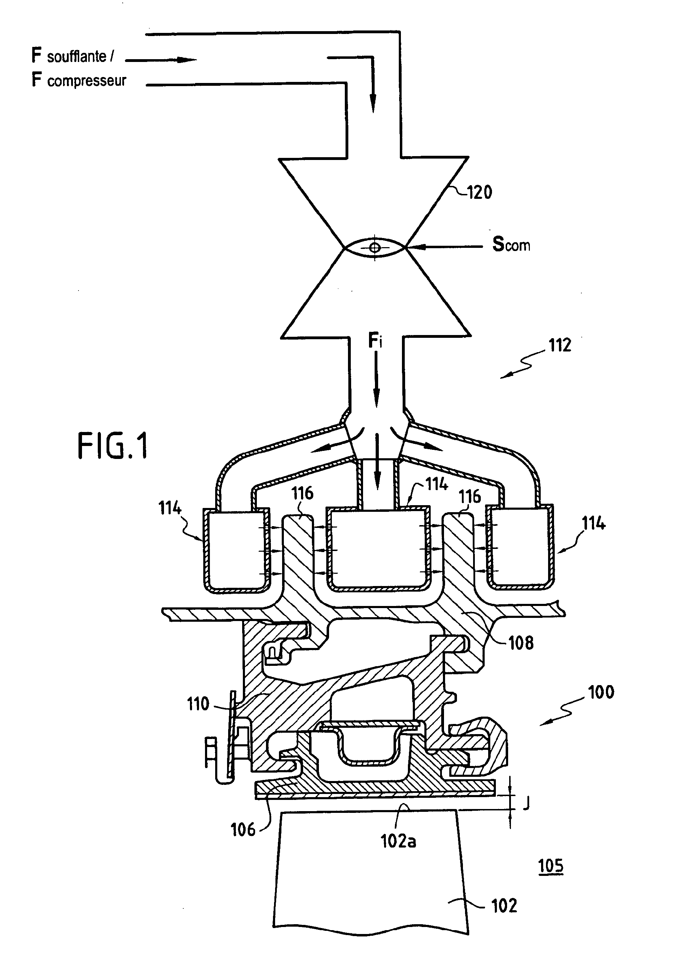

La figure 1 illustre une turbine haute-pression 100 d'une turbomachine qui se compose principalement d'une pluralité d'aubes mobiles 102 disposées dans la veine d'écoulement 105 des gaz chauds issus de la chambre de combustion (non représentée). Les aubes mobiles 102 de la turbine sont entourées par une enveloppe ou anneau 106. L'enveloppe 106 est fixée sur un carter 108 de la turbine par l'intermédiaire d'une pluralité de secteurs d'entretoise 110.

Il est connu que pour augmenter le rendement d'une telle turbine, il est nécessaire de réduire autant que possible le jeu J existant entre le sommet des aubes mobiles 102 du rotor de la turbine et l'enveloppe 106.

A cet effet, un dispositif 112 de pilotage du jeu J est monté autour du carter 108 de la turbine. Ce dispositif de pilotage 112 se compose notamment de rampes annulaires 114 de circulation d'air qui permettent de décharger de l'air sur des ailettes annulaires 116 du carter 108 afin d'en modifier la température.

Le dispositif de pilotage 112 est alimenté par de l'air prélevé sur d'autres parties de la turbomachine (soufflante ou étage(s) du compresseur haute-pression). Le débit de l'air injecté dans le dispositif 112 est régulé par une vanne 120 disposée en amont du dispositif 112. La vanne 120 est équipée d'un actionneur piloté par un signal de commande S_{com} qui positionne la vanne dans une position quelconque variant entre 0% et 100% d'ouverture déterminant ainsi le débit Fᵢ du flux d'air injecté dans le dispositif 112.

Le signal de commande Scom est calculé par une boucle de régulation qui compare le jeu J existant entre le sommet des aubes du rotor et l'enveloppe, avec une valeur de consigne correspondant à une valeur de jeu prédéterminé que l'on souhaite atteindre ou maintenir. Le débit du flux d'air Fᵢ injecté dans le dispositif 112 est alors ajusté en fonction du signal de commande Scom reçu, ce qui permet de dilater ou de contracter thermiquement les ailettes annulaires 116 du carter 108 pour faire varier le diamètre de l'enveloppe 106 de la turbine de manière à amener le jeu J à la valeur de consigne.

Cependant, comme expliqué ci-dessus, le pilotage de la vanne de régulation ne s'effectue que vis-à-vis d'un seul type de valeur de consigne, à savoir une valeur représentative d'un jeu prédéterminé entre le sommet des aubes du rotor et l'enveloppe. Cela s'explique notamment par le fait que cette logique de pilotage est mise en oeuvre pendant la phase de croisière d'un vol qui représente la majorité du temps de vol. Si ce contrôle du jeu permet d'améliorer le rendement du moteur et, par conséquent, d'économiser du carburant en régime de croisière, ce critère n'est pas obligatoirement prioritaire dans les autres phases de fonctionnement du moteur, comme durant les phases de ralenti ou de décollage, pour lesquelles le gain en consommation est négligeable ou la mise en oeuvre du contrôle est inopérante (ex. jeu trop important à basse température au ralenti).

Ainsi, avec les systèmes actuels, il n'est pas possible de contrôler le débit du flux d'air suivant d'autres valeurs de consigne que celle correspondant à un jeu entre le sommet des aubes et l'enveloppe de la turbine.

Le document GB 2104966 divulgue un tel système de contrôle.

### Objet et description succincte de l'invention

La présente invention vise à remédier aux inconvénients précités et à réaliser un système qui permet de piloter le flux d'air envoyé vers l'enveloppe de turbine suivant au moins une autre valeur de consigne que celle correspondant à un jeu prédéterminé entre le rotor et l'enveloppe.

Ce but est atteint avec un système de contrôle d'un flux d'air appliqué à l'enveloppe d'une turbine à gaz de moteur aéronautique, le débit du flux d'air étant ajusté par une vanne de régulation dont la position est commandée par un premier signal de commande calculé à partir d'une première valeur de consigne correspondant à un jeu prédéterminé entre le rotor et l'enveloppe de la turbine, le système comprenant en outre, conformément à l'invention, des moyens pour calculer au moins un deuxième signal de commande basé sur une deuxième valeur de consigne différente de la première valeur représentative du jeu dans la turbine et des moyens de sélection pour sélectionner ce deuxième signal de commande pour le pilotage de la vanne de régulation en réponse à un ou plusieurs paramètres du moteur.

Ainsi, le débit de flux d'air appliqué à l'enveloppe de la turbine peut être contrôlé suivant d'autres valeurs de consigne que celle représentative d'un jeu entre les aubes et l'enveloppe, le système comprenant des moyens pour changer le type de consigne de pilotage en cours de fonctionnement.

Selon un mode de réalisation de l'invention, la deuxième valeur de consigne correspond à une température prédéterminée de la turbine ou à un degré d'ouverture prédéterminé de la vanne.

Dans le cas où la deuxième valeur de consigne correspond à une température prédéterminée de la turbine, les moyens de sélection peuvent sélectionner le deuxième signal de commande en réponse à un ou plusieurs paramètres du moteur permettant de détecter les élévations de température dues aux usures. Lorsque la deuxième valeur de consigne correspond à un degré d'ouverture prédéterminé de la vanne, les moyens de sélection peuvent sélectionner le deuxième signal de commande en réponse à un ou plusieurs paramètres du moteur permettant de détecter un régime de fonctionnement du moteur au ralenti ou une défaillance du premier signal de commande.

Selon un autre mode de réalisation de l'invention, le système comprend encore des moyens pour calculer un troisième signal de commande basé sur une troisième valeur de consigne différente des première et deuxième valeurs de consigne, les moyens de sélection sélectionnant ce troisième signal de commande pour le pilotage de la vanne de régulation en réponse à un ou plusieurs paramètres du moteur.

Lorsque la deuxième valeur de consigne correspond à une température prédéterminée de la turbine, la troisième valeur de consigne peut correspondre à un degré d'ouverture prédéterminé de la vanne. Inversement, lorsque la deuxième valeur de consigne correspond à un degré d'ouverture prédéterminé de la vanne, la troisième valeur de consigne peut correspondre à une température prédéterminée de la turbine.

Les moyens de calcul du signal de commande peuvent comprendre des moyens pour reconstituer des conditions initiales du moteur en fonction d'un ou plusieurs paramètres du moteur. Cela permet d'initialiser le ou les modèles mathématiques utilisés pour le calcul du signal de commande avec les conditions réelles dans lesquelles se trouve la machine.

Le flux d'air contrôlé par le système de l'invention peut être un flux d'air prélevé sur la soufflante ou sur un ou plusieurs étages du compresseur du moteur.

Le but de l'invention est également atteint avec un procédé de contrôle d'un flux d'air appliqué à l'enveloppe d'une turbine à gaz de moteur aéronautique, le débit du flux d'air étant ajusté par une vanne de régulation dont la position est commandée par un premier signal de commande calculé à partir d'une première valeur de consigne correspondant à un jeu prédéterminé entre le rotor et l'enveloppe de la turbine, procédé dans lequel, conformément à l'invention, on calcule en outre au moins un deuxième signal de commande basé sur une deuxième valeur de consigne différente de la première valeur représentative du jeu dans la turbine et on sélectionne ce deuxième signal de commande pour le pilotage de la vanne de régulation en réponse à un ou plusieurs paramètres du moteur.

La deuxième valeur de consigne peut correspondre à une température prédéterminée de la turbine, le deuxième signal de commande étant alors sélectionné en réponse à un ou plusieurs paramètres du moteur permettant de détecter les élévations de température dues aux usures, ou à un degré d'ouverture prédéterminé de la vanne, le deuxième signal de commande étant dans ce cas sélectionné en réponse à un ou plusieurs paramètres du moteur permettant de détecter un régime de fonctionnement du moteur au ralenti ou une défaillance du premier signal de commande.

Selon un mode de réalisation, on calcule encore un troisième signal de commande basé sur une troisième valeur de consigne différente des première et deuxième valeurs de consigne, c'est-à-dire une température prédéterminée de la turbine ou un degré d'ouverture prédéterminé de la vanne suivant la valeur choisie pour la deuxième valeur de consigne, la sélection du troisième signal de commande, calculé en fonction de l'une ou l'autre valeur de consigne, étant effectué en réponse à un ou plusieurs paramètres du moteur comme décrit précédemment.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1, déjà décrite, est une vue schématique montrant un dispositif de ventilation d'une enveloppe de turbine haute-pression, et
- la figure 2 est un schéma fonctionnel d'un mode de réalisation d'un système conformément à la présente invention.

### Description détaillée des modes de réalisation de l'invention

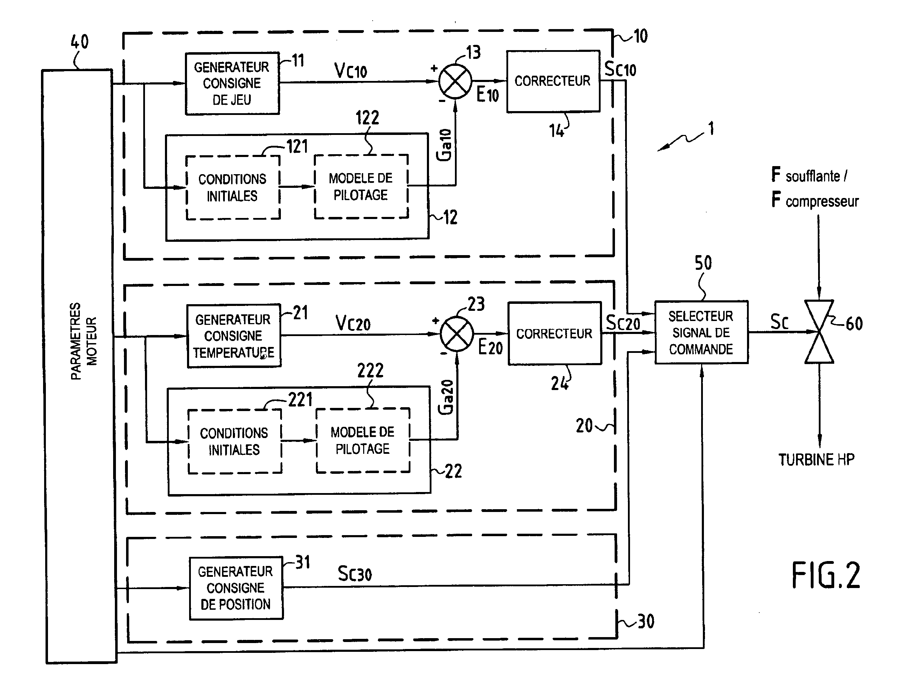

La figure 2 représente, conformément à l'invention, un modèle simplifié d'un mode de réalisation d'un système 1 de sélection de logique de pilotage du débit de flux d'air injecté dans une turbine haute-pression d'un moteur d'avion. Le système 1 comprend tout d'abord, comme connu en soi, une chaîne de traitement ou boucle de régulation 10 pour le contrôle du jeu entre le sommet des aubes de la turbine et son enveloppe comme expliqué précédemment en relation avec la figure 1. La boucle 10 comprend un générateur de consigne 11 qui calcule le jeu désiré qui doit être atteint pour certains paramètres du moteur 40 (vitesse moteur, consommation, pression,...) issus de capteurs présents dans le moteur. Le générateur 11 délivre une valeur de consigne V_{C10} à un comparateur 13 qui reçoit en outre en entrée une grandeur asservie Gₐ₁₀ correspondant à une valeur instantanée du jeu. La grandeur asservie Gₐ₁₀ est calculée par une unité de modélisation 12 qui comprend un modèle mathématique 122 pour calculer le jeu existant entre le sommet des aubes et l'enveloppe de la turbine, ce jeu ne pouvant être mesuré directement. La modélisation du jeu est obtenue à partir de lois de comportement thermique et mécanique établies à la fois pour le rotor et le stator.

Le jeu entre le sommet des aubes et l'enveloppe dépend en effet non seulement des dilatations/contractions thermiques des parties rotor et stator mais également des déformations mécaniques des pièces telles qu'un allongement des aubes sous la force centrifuge du rotor ou un agrandissement du diamètre de l'enveloppe sous la pression interne du moteur. A cet effet, l'unité de modélisation 12 reçoit les paramètres du moteur 40 nécessaires pour calculer le jeu à partir du modèle. Les paramètres de fonctionnement du moteur mesurés et utilisés pour le calcul du jeu sont par exemple la vitesse de la turbine, les températures rotor et stator, la pression interne et externe au voisinage de la turbine.

L'unité de modélisation 12 comprend en outre un module de reconstitution des conditions initiales 121 qui permet d'initialiser ou de « caler » le modèle dans les premiers instants de fonctionnement de la boucle de régulation. Le modèle comprend des lois de comportement qui permettent de prédire les déplacements des pièces en fonction de paramètres (température, pression, vitesse rotor, consommation, etc.) mesurés dans le moteur. Toutefois, les lois de comportement sont en général non linéaires et correspondent à des prédictions qui évoluent suivant une échelle de temps de fonctionnement du moteur. Par conséquent, le modèle doit être au départ initialisé suivant les conditions dans lesquelles se trouvent le moteur. En particulier, il faut « informer » le modèle sur les conditions de démarrage à froid ou à chaud du moteur pour qu'il interprète correctement les paramètres mesurés qu'il utilise. A titre d'exemple, en cas de démarrage à chaud du moteur, les déplacements mécaniques des éléments du moteur sont supérieurs à ceux d'un démarrage à froid tant que l'équilibre thermique du point de fonctionnement n'est pas atteint. Ce phénomène se traduit aussi par un jeu J entre le sommet des aubes du rotor et l'enveloppe qui est différent. La reconstitution de cet état initial peut être obtenu par des paramètres (températures, temps d'arrêt,...) mesurés dans le moteur.

L'unité de modélisation 12 délivre une grandeur asservie Gₐ₁₀ qui correspond à une valeur du jeu existant entre les aubes du rotor et l'enveloppe de la turbine. Cette grandeur Gₐ₁₀ est comparée avec la valeur de consigne V_{C10} dans le comparateur 13 qui délivre en sortie une valeur E₁₀ représentative de l'écart entre la grandeur Gₐ₁₀ du jeu existant et la valeur de consigne V_{C10} qui doit être atteinte. La valeur E₁₀ est transmise à un correcteur 14 qui va transformer l'écart calculé par le comparateur 13 en un signal de commande S_{C10} pour la vanne de régulation 60 de manière à fournir le débit d'air approprié à la turbine pour atteindre le jeu désiré.

Comme expliqué avec la figure 1, on injecte de l'air sur le carter de turbine afin de faire varier le diamètre de l'enveloppe et donc le jeu entre les aubes du rotor et l'enveloppe. L'air injecté dans la turbine peut être extrait soit de la soufflante, soit d'un ou plusieurs étages du compresseur haute-pression, ce qui permet de disposer de flux de températures différentes. Par souci de simplification, les moyens de régulation du débit du flux d'air prélevé dans la soufflante ou dans le compresseur sont représentés par une vanne 60 commandée par un signal de commande S_{C}. Néanmoins, l'homme du métier envisagera sans difficultés d'autres formes de moyens de régulation appropriés et notamment la présence de plusieurs vannes de régulation notamment lorsque l'on prélève de l'air sur plusieurs étages du compresseur.

On décrit maintenant les autres parties du système qui sont mises en oeuvre conformément à l'invention. Elles comprennent principalement la présence d'au moins une autre chaîne de traitement 20 ou 30 ainsi qu'un dispositif de sélection du signal de commande 50 délivré à la vanne 60.

La chaîne de traitement 20 diffère de la chaîne 10 en ce que la logique de pilotage de la vanne est réalisée en fonction d'une valeur de consigne V_{C20} qui correspond à une valeur de température au lieu d'une valeur de jeu dans la turbine. A cet effet, de même que pour la chaîne 10, la chaîne de traitement 20 comprend un générateur de consigne 21 qui délivre une valeur de consigne en température V_{C20}, une unité de modélisation 22 qui calcule, à partir d'un modèle mathématique 222 associé à un module de reconstitution des conditions initiales 221, une grandeur asservie Gₐ₂₀ correspondant à une valeur de température, un comparateur 23 qui calcule l'écart E₂₀ entre la valeur Gₐ₂₀ et la consigne V_{C20}, et un correcteur 24 qui transforme l'écart E₂₀ en un signal de commande S_{C20} de manière à commander la vanne 60 en position pour atteindre la valeur de consigne. La valeur Gₐ₂₀ est obtenue par le même processus que celui décrit plus haut pour la valeur Gₐ₁₀ mais avec un modèle comprenant uniquement des lois de comportement thermique. Les paramètres mesurés dans le moteur et utilisés par l'unité de modélisation 22 sont identiques à ceux utilisés par l'unité de modélisation 12 (température, pression, vitesse rotor, consommation, etc.).

La valeur de consigne en température V_{C20} est générée en fonction de paramètres mesurés dans le moteur. Ces paramètres peuvent correspondre à la température, la pression, la vitesse rotor et la consommation du moteur.

La chaîne de traitement 20 permet de contrôler la température des éléments de la turbine dans des phases de fonctionnement où le contrôle du jeu n'est pas spécifié ou bien lorsque la durée de vie des pièces prévaut sur le rendement du moteur. Tel est le cas par exemple, lorsque que le moteur présente une certaine usure qui amoindrit ses performances. La consommation spécifique en carburant et la température des gaz d'échappement augmentent suivant le nombre d'heures ou de cycles d'utilisation du moteur. En effet, suivant le vieillissement du moteur, on augmente l'alimentation en carburant dans le moteur pour obtenir la poussée demandée. Cette augmentation de consommation de carburant entraîne un accroissement des températures dans la turbine qui peuvent réduire la durée de vie de certaines pièces, telles que le carter de turbine, qui présentent déjà un certain degré de vieillissement. Le pilotage en température du débit de flux d'air permet alors de contrôler la température de ces pièces et d'accroître ainsi leur durée de vie notamment durant les phases de vol où la demande en poussée est importante telles que les phases de décollage.

La sélection entre le signal de commande S_{C10} de pilotage de jeu et le signal de commande S_{C20} de pilotage en température est effectuée par le sélecteur 50 en réponse à un ou plusieurs paramètres reçus des paramètres moteur 40. A titre d'exemple, le degré de vieillissement d'un moteur est proportionnel à l'augmentation de température des gaz d'échappement (EGT). Le sélecteur 50 peut donc surveiller la température des gaz d'échappement pour sélectionner, au-delà d'un seuil déterminé, le signal de commande S_{C20} comme le signal S_{C} envoyée à la vanne 60 pour piloter celle-ci suivant une valeur de consigne de température plutôt qu'une valeur de jeu. Il existe d'autres phases de fonctionnement où il peut être avantageux de piloter la vanne en température plutôt qu'en jeu. De telles phases se trouvent par exemple lors des fonctionnements à température élevée comme dans le cas d'une montée avec une charge de l'avion maximum ou avec un moteur en fin de vie. Le passage dans l'une de ces phases est détecté à partir de paramètres mesurés sur le moteur (température, pression, vitesse rotor, consommation, etc.), ce qui permet la sélection automatique de la logique de pilotage la mieux adaptée.

Le système de la figure 2 comprend une autre chaîne de traitement 30 pour piloter la vanne directement en position. A cet effet, la chaîne 30 comprend simplement un générateur de consigne 31 qui délivre une valeur de consigne directement sous la forme d'un signal de commande S_{C30} qui correspond à un degré ou pourcentage d'ouverture de la vanne déterminé entre 0% et 100%.

Cette logique de pilotage est utile notamment dans les phases de fonctionnement du moteur où il n'y a pas de jeu spécifié entre les aubes et l'enveloppe de turbine et où les températures générées dans la turbine sont nettement inférieures aux niveaux de températures susceptibles d'endommager des pièces de la turbine. De telles phases correspondent essentiellement aux phases de ralenti du moteur au sol. Pour sélectionner le signal de commande en position S_{C30} comme signal de commande S_{C} appliqué à la vanne 60, le sélecteur 50 surveille par exemple des paramètres de régime moteur tels que la vitesse de manière à détecter les phases de fonctionnement au ralenti. De façon optionnelle, les paramètres de température, de pression ou de consommation peuvent être également pris en compte par le sélecteur pour le pilotage en position de la vanne.

Le signal de commande S_{C30} peut également servir comme signal de positionnement par défaut en cas de défaillance du pilotage de la vanne par une autre chaîne de traitement. Dans ce cas, le sélecteur 50 remplace le signal de commande défaillant par le signal de commande S_{C30} en réponse à une information signalant la défaillance de commande de manière à placer la vanne dans une position déterminée.

Le système et le procédé qui viennent d'être décrits sont mis en oeuvre dans des moyens de traitement programmables (ex. microcontrôleur) bien connus en soi. Le système et le procédé de l'invention peuvent par exemple être programmés et mis en oeuvre dans l'unité électronique de contrôle moteur (EEC).

## Revendications

1. Système de contrôle d'un flux d'air appliqué à l'enveloppe d'une turbine à gaz de moteur aéronautique, le débit du flux d'air étant ajusté par une vanne de régulation (60) dont la position est commandée par un premier signal de commande (SC10) calculé à partir d'une première valeur de consigne (VC10) correspondant à un jeu prédéterminé entre le rotor et l'enveloppe de la turbine,
**caractérisé en ce qu'**il comprend en outre des moyens (20 ; 30) pour calculer au moins un deuxième signal de commande (SC20; SC30) basé sur une deuxième valeur de consigne (VC20; VC30) différente de la première valeur (VC10) représentative du jeu dans la turbine et des moyens de sélection (50) pour sélectionner ce deuxième signal de commande pour le pilotage de la vanne de régulation en réponse à un ou plusieurs paramètres du moteur.

2. Système selon la revendication 1, **caractérisé en ce que** la deuxième valeur de consigne (VC20; VC30) correspond à une température prédéterminée de la turbine ou à un degré d'ouverture prédéterminé de la vanne.

3. Système selon la revendication 1, **caractérisé en ce que** la deuxième valeur de consigne (VC20) correspond à une température prédéterminée de la turbine, les moyens de sélection (50) sélectionnant le deuxième signal de commande (SC20) en réponse à un ou plusieurs paramètres du moteur permettant de détecter les élévations de température dues aux usures.

4. Système selon la revendication 1, **caractérisé en ce que** la deuxième valeur de consigne (VC30) correspond à un degré d'ouverture prédéterminé de la vanne, les moyens de sélection (50) sélectionnant le deuxième signal de commande (SC30) en réponse à un ou plusieurs paramètres du moteur permettant de détecter un régime de fonctionnement du moteur au ralenti ou une défaillance du premier signal de commande.

5. Système selon la revendication 1 à 4, **caractérisé en ce qu'**il comprend en outre des moyens pour calculer un troisième signal de commande (SC30; Sc20) basé sur une troisième valeur de consigne (VC30; VC20) différente des première et deuxième valeurs de consigne, les moyens de sélection (50) sélectionnant ce troisième signal de commande pour le pilotage de la vanne de régulation en réponse à un ou plusieurs paramètres du moteur.

6. Système selon la revendication 5, **caractérisé en ce que** la troisième valeur de consigne (VC30; VC20) correspond à un degré d'ouverture prédéterminé de la vanne ou à une température prédéterminée de la turbine.

7. Système selon l'une quelconque des revendications 1 à 3, **caractérisé en ce qu'**il comprend en outre des moyens pour calculer un troisième signal de commande (SC30) basé sur une troisième valeur de consigne (VC30) correspondant à un degré d'ouverture prédéterminé de la vanne, les moyens de sélection (50) sélectionnant le troisième signal de commande en réponse à un ou plusieurs paramètres du moteur permettant de détecter un régime de fonctionnement du moteur au ralenti ou une défaillance du premier signal de commande.

8. Système selon l'une quelconque des revendications 1, 2 et 4, **caractérisé en ce qu'**il comprend en outre des moyens pour calculer un troisième signal de commande (SC20) basé sur une troisième valeur de consigne (VC20) correspondant à une température prédéterminée de la turbine, les moyens de sélection sélectionnant (50) le troisième signal de commande en réponse à un ou plusieurs paramètres du moteur permettant de détecter un niveau d'usure déterminé.

9. Système selon l'une quelconque des revendications 1 à 8, **caractérisé en ce que** les moyens de calcul (20 ; 30) du signal de commande comprennent des moyens (121) pour reconstituer des conditions initiales du moteur en fonction d'un ou plusieurs paramètres du moteur.

10. Système selon l'une quelconque des revendications 1 à 9, **caractérisé en ce que** le flux d'air appliqué à l'enveloppe de la turbine est prélevé sur la soufflante ou sur un ou plusieurs étage du compresseur du moteur.

11. Procédé de contrôle d'un flux d'air appliqué à l'enveloppe d'une turbine à gaz de moteur aéronautique, le débit du flux d'air étant ajusté par une vanne de régulation (60) dont la position est commandée par un premier signal de commande (SC10) calculé à partir d'une première valeur de consigne (VC10) correspondant à un jeu prédéterminé entre le rotor et l'enveloppe de la turbine,
**caractérisé en ce qu'**on calcule en outre au moins un deuxième signal de commande (SC20; SC30) basé sur une deuxième valeur de consigne (VC20; VC30) différente de la première valeur (VC10) représentative du jeu dans la turbine et **en ce qu'**on sélectionne ce deuxième signal de commande pour le pilotage de la vanne de régulation en réponse à un ou plusieurs paramètres du moteur.

12. Procédé selon la revendication 11, **caractérisé en ce que** la deuxième valeur de consigne (VC20; VC30) correspond à une température prédéterminée de la turbine ou à un degré d'ouverture prédéterminé de la vanne.

13. Procédé selon la revendication 11, **caractérisé en ce que** la deuxième valeur de consigne (VC20) correspond à une température prédéterminée de la turbine et **en ce qu'**on sélectionne le deuxième signal de commande (SC20) en réponse à un ou plusieurs paramètres du moteur permettant de détecter les élévations de température dues aux usures.

14. Procédé selon la revendication 11, **caractérisé en ce que** la deuxième valeur de consigne (VC30) correspond à un degré d'ouverture prédéterminé de la vanne et **en ce qu'**on sélectionne le deuxième signal de commande (SC30) en réponse à un ou plusieurs paramètres du moteur permettant de détecter un régime de fonctionnement du moteur au ralenti ou une défaillance du premier signal de commande.

15. Procédé selon la revendication 11 à 14, **caractérisé en ce qu'**on calcule en outre un troisième signal de commande (SC30; SC20) basé sur une troisième valeur de consigne (VC30; VC20) différente des première et deuxième valeurs de consigne et **en ce qu'**on sélectionne ce troisième signal de commande pour le pilotage de la vanne de régulation en réponse à un ou plusieurs paramètres du moteur.

16. Procédé selon la revendication 15, **caractérisé en ce que** la troisième valeur de consigne (VC30; VC20) correspond à un degré d'ouverture prédéterminé de la vanne ou à une température prédéterminée de la turbine.

17. Procédé selon l'une des revendications 11 à 13, **caractérisé en ce qu'**on calcule en outre un troisième signal de commande (SC30) basé sur une troisième valeur de consigne (VC30) correspondant à un degré d'ouverture prédéterminé de la vanne et **en ce qu'**on sélectionne le troisième signal de commande en réponse à un ou plusieurs paramètres du moteur permettant de détecter un régime de fonctionnement du moteur au ralenti ou une défaillance du premier signal de commande.

18. Procédé selon l'une des revendications 11, 12 et 14, **caractérisé en ce qu'**on calcule en outre un troisième signal de commande (SC20) basé sur une troisième valeur de consigne (VC20) correspondant à une température prédéterminée de la turbine et **en ce qu'**on sélectionne le troisième signal de commande en réponse à un ou plusieurs paramètres du moteur permettant de détecter un niveau d'usure déterminé.

19. Procédé selon l'une quelconque des revendications 11 à 18, **caractérisé en ce qu'**il comprend une étape de reconstitution des conditions initiales du moteur en fonction d'un ou plusieurs paramètres du moteur avant l'étape de calcul du signal de commande.

20. Procédé selon l'une quelconque des revendications 11 à 19, **caractérisé en ce que** le flux d'air appliqué à l'enveloppe de la turbine est prélevé sur la soufflante ou sur un ou plusieurs étage du compresseur du moteur.

## Patentansprüche

1. System zur Steuerung eines an die Ummantelung einer Gasturbine eines Flugzeugtriebwerks angelegten Luftstroms, wobei die Menge des Luftstroms durch ein Regelventil (60) eingestellt wird, dessen Stellung durch ein erstes Steuersignal (SC10), das anhand eines einem vorbestimmten Spiel zwischen dem Rotor und der Ummantelung der Turbine entsprechenden ersten Sollwerts (VC10) berechnet wird, gesteuert wird,
**dadurch gekennzeichnet, dass** es ferner Mittel (20; 30) zur Berechnung wenigstens eines zweiten Steuersignals (SC20; SC30), das auf einem von dem für das Spiel in der Turbine repräsentativen ersten Wert (VC10) verschiedenen zweiten Sollwert (VC20; VC30) basiert, sowie Auswahlmittel (50) umfasst, um dieses zweite Steuersignal für die Steuerung des Regelventils als Reaktion auf einen oder mehrere Parameter des Triebwerks auszuwählen.

2. System nach Anspruch 1, **dadurch gekennzeichnet, dass** der zweite Sollwert (VC20; VC30) einer vorbestimmten Temperatur der Turbine oder einem vorbestimmten Öffnungsgrad des Ventils entspricht.

3. System nach Anspruch 1, **dadurch gekennzeichnet, dass** der zweite Sollwert (VC20) einer vorbestimmten Temperatur der Turbine entspricht, wobei die Auswahlmittel (50) das zweite Steuersignal (SC20) als Reaktion auf einen oder mehrere Parameter des Triebwerks, die ermöglichen, die verschleißbedingten Temperaturerhöhungen zu erfassen, auswählen.

4. System nach Anspruch 1, **dadurch gekennzeichnet, dass** der zweite Sollwert (VC30) einem vorbestimmten Öffnungsgrad des Ventils entspricht, wobei die Auswahlmittel (50) das zweite Steuersignal (SC30) als Reaktion auf einen oder mehrere Parameter des Triebwerks, die ermöglichen, eine Betriebsdrehzahl des Triebwerks im Leerlauf oder ein Ausfallen des ersten Steuersignals zu erfassen, auswählen.

5. System nach Anspruch 1 bis 4, **dadurch gekennzeichnet, dass** es ferner Mittel zur Berechnung eines dritten Steuersignals (SC30; SC20), das auf einem von dem ersten und dem zweiten Sollwert verschiedenen dritten Sollwert (VC30; VC20) basiert, umfasst, wobei die Auswahlmittel (50) dieses dritte Steuersignal für die Steuerung des Regelventils als Reaktion auf einen oder mehrere Parameter des Triebwerks auswählen.

6. System nach Anspruch 5, **dadurch gekennzeichnet, dass** der dritte Sollwert (VC30; VC20) einem vorbestimmten Öffnungsgrad des Ventils oder einer vorbestimmten Temperatur der Turbine entspricht.

7. System nach einem der Ansprüche 1 bis 3, **dadurch gekennzeichnet, dass** es ferner Mittel zur Berechnung eines dritten Steuersignals (SC30), das auf einem einem vorbestimmten Öffnungsgrad des Ventils entsprechenden dritten Sollwert (VC30) basiert, umfasst, wobei die Auswahlmittel (50) das dritte Steuersignal als Reaktion auf einen oder mehrere Parameter des Triebwerks, die ermöglichen, eine Betriebsdrehzahl des Triebwerks im Leerlauf oder ein Ausfallen des ersten Steuersignals zu erfassen, auswählen.

8. System nach einem der Ansprüche 1, 2 und 4, **dadurch gekennzeichnet, dass** es ferner Mittel zur Berechnung eines dritten Steuersignals (SC20), das auf einem einer vorbestimmten Temperatur der Turbine entsprechenden dritten Sollwert (VC20) basiert, umfasst, wobei die Auswahlmittel (50) das dritte Steuersignal als Reaktion auf einen oder mehrere Parameter des Triebwerks, die ermöglichen, einen bestimmten Verschleißgrad zu erfassen, auswählen.

9. System nach einem der Ansprüche 1 bis 8, **dadurch gekennzeichnet, dass** die Mittel zur Berechnung (20; 30) des Steuersignals Mittel (121) zur Wiederherstellung von Anfangsbedingungen des Triebwerks in Abhängigkeit von einem oder mehreren Parametern des Triebwerks umfassen.

10. System nach einem der Ansprüche 1 bis 9, **dadurch gekennzeichnet, dass** der an die Ummantelung der Turbine angelegte Luftstrom an dem Gebläse oder an einer oder mehreren Stufen des Verdichters des Triebwerks entnommen wird.

11. Verfahren zur Steuerung eines an die Ummantelung einer Gasturbine eines Flugzeugtriebwerks angelegten Luftstroms, wobei die Menge des Luftstroms durch ein Regelventil (60) eingestellt wird, dessen Stellung durch ein erstes Steuersignal (SC10), das anhand eines einem vorbestimmten Spiel zwischen dem Rotor und der Ummantelung der Turbine entsprechenden ersten Sollwerts (VC10) berechnet wird, gesteuert wird,
**dadurch gekennzeichnet, dass** ferner wenigstens ein zweites Steuersignal (SC20; SC30), das auf einem von dem für das Spiel in der Turbine repräsentativen ersten Wert (VC10) verschiedenen zweiten Sollwert (VC20; VC30) basiert, berechnet wird und dass dieses zweite Steuersignal für die Steuerung des Regelventils als Reaktion auf einen oder mehrere Parameter des Triebwerks ausgewählt wird.

12. Verfahren nach Anspruch 11, **dadurch gekennzeichnet, dass** der zweite Sollwert (VC20; VC30) einer vorbestimmten Temperatur der Turbine oder einem vorbestimmten Öffnungsgrad des Ventils entspricht.

13. Verfahren nach Anspruch 11, **dadurch gekennzeichnet, dass** der zweite Sollwert (VC20) einer vorbestimmten Temperatur der Turbine entspricht und dass das zweite Steuersignal (SC20) als Reaktion auf einen oder mehrere Parameter des Triebwerks, die ermöglichen, die verschleißbedingten Temperaturerhöhungen zu erfassen, ausgewählt wird.

14. Verfahren nach Anspruch 11, **dadurch gekennzeichnet, dass** der zweite Sollwert (VC30) einem vorbestimmten Öffnungsgrad des Ventils entspricht und dass das zweite Steuersignal (SC30) als Reaktion auf einen oder mehrere Parameter des Triebwerks, die ermöglichen, eine Betriebsdrehzahl des Triebwerks im Leerlauf oder ein Ausfallen des ersten Steuersignals zu erfassen, ausgewählt wird.

15. Verfahren nach Anspruch 11 bis 14, **dadurch gekennzeichnet, dass** ferner ein drittes Steuersignal (SC30; SC20), das auf einem von dem ersten und dem zweiten Sollwert verschiedenen dritten Sollwert (VC30; VC20) basiert, berechnet wird und dass dieses dritte Steuersignal für die Steuerung des Regelventils als Reaktion auf einen oder mehrere Parameter des Triebwerks ausgewählt wird.

16. Verfahren nach Anspruch 15, **dadurch gekennzeichnet, dass** der dritte Sollwert (VC30; VC20) einem vorbestimmten Öffnungsgrad des Ventils oder einer vorbestimmten Temperatur der Turbine entspricht.

17. Verfahren nach einem der Ansprüche 11 bis 13, **dadurch gekennzeichnet, dass** ferner ein drittes Steuersignal (SC30), das auf einem einem vorbestimmten Öffnungsgrad des Ventils entsprechenden dritten Sollwert (VC30) basiert, berechnet wird und dass das dritte Steuersignal als Reaktion auf einen oder mehrere Parameter des Triebwerks, die ermöglichen, eine Betriebsdrehzahl des Triebwerks im Leerlauf oder ein Ausfallen des ersten Steuersignals zu erfassen, ausgewählt wird.

18. Verfahren nach einem der Ansprüche 11, 12 und 14, **dadurch gekennzeichnet, dass** ferner ein drittes Steuersignal (SC20), das auf einem einer vorbestimmten Temperatur der Turbine entsprechenden dritten Sollwert (VC20) basiert, berechnet wird und dass das dritte Steuersignal als Reaktion auf einen oder mehrere Parameter des Triebwerks, die ermöglichen, einen bestimmten Verschleißgrad zu erfassen, ausgewählt wird.

19. Verfahren nach einem der Ansprüche 11 bis 18, **dadurch gekennzeichnet, dass** es einen Schritt zur Wiederherstellung der Anfangsbedingungen des Triebwerks in Abhängigkeit von einem oder mehreren Parametern des Triebwerks vor dem Schritt zur Berechnung des Steuersignals umfasst.

20. Verfahren nach einem der Ansprüche 11 bis 19, **dadurch gekennzeichnet, dass** der an die Ummantelung der Turbine angelegte Luftstrom an dem Gebläse oder an einer oder mehreren Stufen des Verdichters des Triebwerks entnommen wird.

## Claims

1. A system for controlling a flow of air applied to the shroud of a gas turbine in an airplane engine, the flow of air being adjusted by a regulator valve (60) of position that is controlled by a first control signal (SC10) calculated on the basis of a first setpoint value (VC10) corresponding to predetermined clearance between the rotor and the turbine shroud,
**Characterized in that** it further comprises means (20 ; 30) for calculating at least one second control signal (SC20 ; SC30) based on a second setpoint value (VC20 ; VC30) different from the first value (VC10) representing turbine clearance, and selector means (50) for selecting the second control signal to control the regulator valve in response to one or more engine parameters.

2. A system according to claim 1, **characterized in that** the second setpoint value (VC20 ; VC30) corresponds to a predetermined turbine temperature or to a predetermined degree of valve opening.

3. A system according to claim 1, **characterized in that** the second setpoint value (VC20) corresponds to a predetermined turbine temperature, the selector means (50) selecting the second control signal (SC20) in response to one or more engine parameters that enable temperature rises due to wear to be detected.

4. A system according to claim 1, **characterized in that** the second setpoint value (VC30) corresponds to a predetermined degree of valve opening, the selector means (50) selecting the second control signal (SC30) in response to one or more engine parameters suitable for detecting that the engine is operating at idling speed or for detecting a failure of the first control signal.

5. A system according to claims 1 to 4, **characterized in that** it comprises means for calculating a third control signal (SC30 ; SC20) based on a third setpoint value (VC30 ; VC20) different from the first and second setpoint values, the selector means (50) selecting this third control signal for controlling the regulator valve in response to one or more engine parameters.

6. A system according to claim 5, **characterized in that** the third setpoint value (VC30 ; VC20) corresponds to a predetermined degree of valve opening or to a predetermined turbine temperature.

7. A system according to anyone of claims 1 to 3, **characterized in that** it comprises means for calculating a third control signal (SC30) based on a third setpoint value (VC30) corresponding to a predetermined degree of valve opening, the selector means (50) selecting the third control signal in response to one or more engine parameters serving to detect that the engine is operating at idling speed or to detect failure of the first control signal.

8. A system according to anyone of claims 1, 2 and 4, **characterized in that** it comprises means for calculating a third control signal (SC20) based on a third setpoint value (VC20), corresponding to a predetermined turbine temperature, the selector means (50) selecting the third control signal in response to one or more engine parameters enabling a determined level of wear to be detected.

9. A system according to anyone of claims 1 to 8, **characterized in that** the means (20 ; 30) for calculating the control signal include means (121) for reconstituting initial conditions of the engine as a function of one or more engine parameters.

10. A system according to anyone of claims 1 to 9, **characterized in that** the air flow applied to the turbine casing is taken from the fan or from one or more compresser stages of the engine.

11. A method of controlling an air flow applied to a shroud of a gas turbine in an airplane engine, the air flow being adjusted by a regulator valve (60) of position that is controlled by a first control signal (SC10) calculated from a first setpoint value (VC10) corresponding to predetermined clearance between the rotor and the turbine shroud,
**characterized in that** at least one second control signal (SC20 ; SC30) is also calculated based on a second setpoint value (VC20 ; VC30) different from the first value (VC10) representing clearance in the turbine, and wherein said second control signal is selected for controlling the regulator valve in response to one or more parameters of the engine.

12. A method according to claim 11, **characterized in that** the second setpoint value (VC20 ; VC30) corresponds to a predetermined turbine temperature or to a predetermined degree of valve opening.

13. A method according to claim 11, **characterized in that** the second setpoint value (VC20) corresponds to a predetermined turbine temperature, and **in that** the second control signal (SC20) is selected in response to one or more engine parameters enabling temperature rises due to wear to be detected.

14. A method according to claim 11, **characterized in that** the second setpoint value (VC30) corresponds to a predetermined degree of valve opening, and **in that** the second control signal (SC30) is selected in response to one or more engine parameters enabling operation of the engine and idling speed to be detected, or enabling a failure of the first control signal to be detected.

15. A method according to anyone of claims 11 to 14, **characterized in that** a third control signal (SC30 ; SC20) is also calculated based on a third setpoint value (VC30 ; VC20) different from the first and second setpoint values, and wherein said third control signal is selected for controlling the regulator valve in response to one or more engine parameters.

16. A method according to claim 15, **characterized in that** the third setpoint value (VC30 ; VC20) corresponds to a predetermined degree of valve opening or to a predetermined turbine temperature.

17. A method according to anyone of claims 11 to 13, **characterized in that** a third control signal (SC30) is also calculated based on a third setpoint value (VC30) corresponding to a predetermined degree of valve opening, and **in that** the third control signal is selected in response to one or more engine parameters enabling operation of the engine at idling speed to be detected, or enabling a failure of the first control signal to be detected.

18. A method according to claims 11, 12 and 14, **characterized in that** a third control signal (SC20) is also calculated based on a third setpoint value (VC20) corresponding to a predetermined turbine temperature, and wherein the third control signal is selected in response to one or more engine parameters enabling a determined degree of wear to be detected.

19. A method according to anyone of claims 11 to 18, **characterized in that** it includes the step of reconstituting the initial conditions of the engine as a function of one or more engine parameters prior to performing the step of calculating the control signal.

20. A method according to anyone of claims 11 to 19, **characterized in that** the air flow applied to the turbine shroud is taken from the fan or from one or more compresser stages of the engine.
